# EUROPEAN PATENT SPECIFICATION

(11) **EP 3 797 028 B1**
(45) Date of publication and mention of the grant of the patent: **09.03.2022**
(21) Application number: 19700245.4
(22) Date of filing: 02.01.2019
(51) Int. Cl.: B29C 65/20, B29C 37/04, B29C 65/78

(54) **A WELDING MACHINE WITH CLEANING UNIT**
SCHWEISSMASCHINE MIT REINIGUNGSEINHEIT
MACHINE DE SOUDAGE POURVUE D'UNITÉ DE NETTOYAGE

(30) Priority: 23.05.2018 TR 201807412
(43) Date of publication of application: 31.03.2021
(73) Proprietor: Kaban Makina San.Ve Tic.Ltd.Sti, Arnavutköy, 34555 Istanbul (TR)
(72) Inventor: KABAN, Salim, 34555 Arnavutköy 34555 Istanbul (TR)
(74) Representative: Wörz, Volker Alfred
(86) International application number: PCT/EP2019/050043
(87) International publication number: WO 2019/223905

(56) References cited:
- EP-A1- 3 117 981
- DE-A1- 3 614 673

## Description

### Technical Field

The present invention relates to a welding machine having a cleaning unit, in which the burrs on the flat surfaces are crushed by the thrust plate and the stripping blades of the stripped blades are removed, which prevents the melting material from coming out at the edges of the welded groove open PVC profiles.

### Prior Art

For the welding process of PVC profiles, a heating plate with a flat surface wrapped with Teflon (PTFE) film and/or resistance is heated to a certain temperature. After the heating process, the heating plate and/or the resistor are used to heat the surfaces of the PVC profiles to be joined and preferably the surfaces of the profile are heated by about 3 mm and then the surfaces heated by a force of 4 bar are pressed together. After the joining process, weld burrs are formed on the joint surface of the profile. Therefore, burr must be cleaned after welding process. Thus today, machines are used for removal of burrs accumulated on surface and corner sections at PVC profiles after welding process.

There are different systems to prevent the welding burr used in the prior art. One of these systems is to press the plate to the weld areas of the profile at the time of welding, thus preventing the formation of burrs on the outer surface by ensuring that the welding burr is not flowing outwards. However, in this technique burr formation is prevented only on flat surfaces. The weld burrs on recessed and prominent PVC profile joint surfaces cannot be removed with this system of the prior art. Therefore, there is a need for a burr cleaning machine, in which both the flat surfaces and the burrs on the recessed and prominent surfaces are cleaned quickly, smoothly and serially.

EP 3 117 981 A1 discloses a welding machine for joining together PVC profiles without burrs according to the preamble of claim 1. The welding machine known from that reference combines welding of a groove that serves as a cavity for the welding burr and the use of containment means to avoid the formation of a protruding burr during the welding process. DE 36 14 673 A1 also refers to a welding machine for joining together PVC profiles. The welding machine known from that reference uses containment means for preventing the formation of a welding burr as an alternative to the machining of the burr after it has cooled down.

In the patent application no TR201412334, a burr-free PVC profile corner welding machine is mentioned. The welding machine mentioned is comprised of the main body, spring, joint, washer, and the support group, which may be positioned at the top or bottom, with the support plate, at least one cutting end, at least one bearing member, the main body, conveyor belt 1, conveyor belt 2, servo motor 1, belt drive and tensioning roller, servo motor mounting plate, milling group containing burr absorption group (5), horizontal or vertical processing channel with channeled resistance upper or lower support group and milling group can move up and down servo motor 2, bottom or upper support group, servo motor 3, which enables the movement of the milling group and ducted resistance components, and servo motor 4, which enables the movement of the movable tables, resistance cleaning by brush group which provides cleaning of the remaining burrs on channel resistance, profile transfer group that enables removal of profile from source area.

### Short Description of Invention

The object of the present invention relates to a welding machine with a cleaning unit, which prevents the formation of burrs on the surface of the PVC profiles after welding process by cleaning the stripping blades with the positioning bearings and the burrs formed on the flat surfaces by preventing the melting of the melted material on the edges of the welded groove PVC profiles.

Another object of the present invention relates to a welding machine having a cleaning unit which saves labor and time by preventing the formation of burrs on the surface of PVC profiles after welding.

Another object of the present invention relates to a welding machine having a cleaning unit in which the clearance in the radiused and recessed portions of the profile does not cause any scratches on the profile.

Another object of the present invention relates to a welding machine with a cleaning unit which saves the installation in the area of operation by eliminating the need for burr cleaning machines with the burr-free welding of the welding process.

### Detailed Description of Invention

To achieve the aim of the present invention, this "Welding machine with a cleaning Unit" is presented in the attached figure and this figure is:

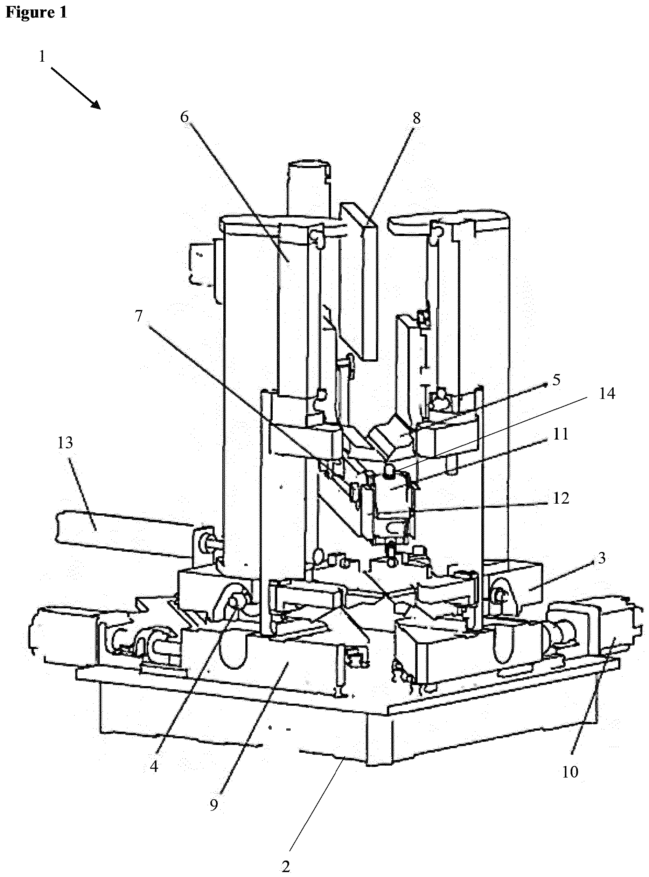

Figure 1 is a front perspective view of a welding machine with a cleaning unit according to the invention.

Parts included in the figure are individually enumerated and their equivalents were provided below.
1. Welding Machine
2. Body
3. Sliding table
4. Movement element
5. Clamping unit
6. Clamping movement element
7. Processing group
8. Heater element
9. Moving jaw
10. Engine
11. Cleaning unit
12. Rest mechanism
13. Repulsion element
14. Positioning bearing

A welding machine (1) according to the invention is defined in claim 1.

In a welding machine; movement element (4), the clamping unit (5), clamping movement element (6), processing group (7), heating element (8), pressing jaw (9), engine (10), cleaning unit (11), rest mechanism (12) and repulsion element (13) are on the body (2) forming the invention.

Sliding table (3) is moved by means of the movement element (4) which is a piston on the body (2). After the fixing of the profile placed on the sliding table (3) with the clamping unit (5), it serves for help to open the welding groove with the processing group (7). Sliding table (3) moves to the melting position by moving to the profile ends required for the joining operation with the heater element (8) after application of the opening of the welding groove. Sliding table (3) serves to help in the melting position by the heating element (8) to perform the melting operation.

In the welding machine (1) of the present invention, sliding tables (3) move towards the end parts of the profiles in fixed position and melting is performed at the end of the profiles with the help of the moving jaws (9).

The sliding table (3) also serves to help cleaning the burrs with the stripping blades by moving the cleaning unit (11) after cleaning process.

In the preferred embodiment of the present invention, the clamping unit (5) provides the fixing of the profiles to be assembled and placed on the sliding table (3) by means of the clamping movement element (6) which is a piston used for profile fixing. Thus, allowing the profile joint to remain constant due to position changes caused by the moving jaws (9).

In the preferred embodiment of the present invention, the clamping movement element (6) used for securing the profile is a piston.

In the welding machine (1) of the present invention, the processing group (7) is used to open the welding opening in the radiused and recessed parts of the profile. By this means, material overflow from the joints is prevented.

In the present invention, the heating element (8) is preferably a heating plate and/or a resistor which melts the end of the profiles joined together after the welding groove has been opened. In the preferred embodiment, the heater element (8) is used as a flat resistor which is wrapped with Teflon (PTFE) film. Heating element (8) melts the profiles by the sliding table (3) bringing the profiles to the melting position. After this process, the profiles are pressed together welding process is performed.

In the preferred embodiment of the present invention, moving jaw (9) is moved by means of an engine (10) and brings the fixed profiles to the appropriate position for melting. Moving jaws (9) perform the welding process by pressing the profiles together after melting process.

In the preferred embodiment of the present invention, the thrust plate is located on the sliding table (3) and after welding, the burrs formed on the flat surfaces of the profiles are crushed from their side surfaces, preferably up to 0.1 mm thin.

In the welding machine (1) of the present invention, the cleaning unit (11) comprises stripping blades for removing the burrs from the profiles. Thus, the burrs are cleaned with the stripping blades on the welded profiles brought to the cleaning position by the sliding tables (3). In the cleaning unit (11), the stripping blades are preferably servo-controlled. Rest mechanism (12) is used for the proper operation of this process. In this way, the cleaning unit (11) removes the burrs that occur after melting on the profiles by using the stripping blades and the rest mechanism (12).

While the profiles are in the fixed position, the sliding tables (3) are retracted for cleaning and the strippers located in the cleaning unit (11) are positioned on flat surfaces with the positioning bearings (14) and are cleaned of burrs after melting. After this process, the repulsion element which is a piston (13) pushes the frame formed by joining the profiles away from the body (2).

In the preferred embodiment of the present invention, rest mechanism (12) is combined with the processing group which is a mill (7) and the stripping blades and can compensate for the error in the profile length by a spring mechanism.

In the welding machine (1) of the present invention, the positioning bearings (14) and the stripping blades are provided to clean the burrs which are formed in the joints of the profile.

In the welding machine (1) according to the present invention, it is prevented that the material melting away from the edges is removed, when the welding groove is opened with the processing group (7) to the desired profiles. The burrs occurred on the flat surfaces during the joining are crushed by the thrust plate (9) from the side surfaces to the desired fineness. After crushing process, the sliding tables (3) arrive at the cleaning position and provide cleaning of the burrs after melting with the servo-controlled stripping blades having the cleaning unit (11), after positioning the rest mechanism (12) on the flat surfaces of the profiles.

With welding machine (1) of the present invention, it is prevented that the formation of burrs on the surface of PVC profiles, thus saving labor and time, and also preventing the scratching on the profile of the profile from the radiused and recessed parts of the profile. Besides that, thanks to the burr-free application of the welding process, the need for additional burr cleaning machine is eliminated and space saving is achieved in the operation area.

Within these basic concepts, it is possible to realize various practices relevant with "A Welding Machine with a Cleaning Unit (1)", subject of this invention, it may not be limited to samples explained here, it is actually as set forth in the claims.

## Claims

1. Welding machine (1) for joining together PVC profiles without burrs, the apparatus comprising:
- at least one body (2) in which PVC profiles are processed for welding;
- at least two sliding tables (3) on the at least one body (2) where the profiles to be welded are placed,
- at least one clamping unit (5) having at least one clamping element (6) adapted for fixing the profiles placed on the sliding tables (3),
- at least one processing group (7) adapted for opening a welding groove on the fixed profiles,
- at least one heating element (8) adapted for melting the profiles in order to join the profiles brought together by a movement of the movable sliding tables (3) after opening of the welding groove;
- at least one thrust plate adapted for adjusting the thickness of burrs, which may occur on flat joint surfaces of the profiles due to the welding groove, but which do not occur on the edges of the profiles, by compressing the flat joint surfaces from side surfaces of the profiles, and
- at least two moving jaws (9) adapted for moving the fixed profiles to the melting position with the help of an engine (10) and for combining the movement with the pressing of the profiles against each other,
**characterized in that**
- the at least two sliding tables (3) are adapted for being moved by a movement element (4), thereby allowing a burr width to be adjusted by means of an adjustment mechanism, and in which cleaning and welding positions can be adjusted by controlled horizontal movement (3), and **in that** the welding machine (1) comprises:
- at least one cleaning unit (11) adapted for cleaning the burrs formed on the profile surfaces, with positioning blades on the clamping unit (5) and stripping blades which compensate inclinations of the profiles by means of a spring mechanism,
- at least one rest mechanism (12) positioned on the flat joint surfaces of the profiles during the burrs cleaning process of the cleaning unit (11), which is positioned on the clamping unit (5) and adapted for compensating deviations in the profile length by means of a spring mechanism it has,
- at least one frame repulsion element (13) adapted for removing welded profiles from the body (2) and
- at least one positioning bearing (14) adapted for ensuring a smooth deburring process.

2. Welding machine (1) according to Claim 1, **characterized in that** a sliding table (3) is adapted for providing the opening of welding groove with the processing group (7) after fixing the profile placed on it with the clamping unit (5).

3. Welding machine (1) according to Claim 1 or 2, **characterized in that** a sliding table (3) is adapted for moving to the melting position by moving to the profile ends required for the joining operation with the heater element (8) after application of the opening of the welding groove.

4. Welding machine (1) according to Claim 3, **characterized in that** the sliding table (3) is adapted for helping in the melting position by the heating element (8) to perform the melting operation.

5. Welding machine (1) according to any of the preceding Claims, **characterized in that** a sliding table (3) is adapted for helping to clean the burrs with the stripping blades by moving the at least one cleaning unit (11) after the cleaning process.

6. Welding machine (1) according to any of the preceding Claims, **characterized in that** the clamping unit (5) is adapted for providing the fixing of the profiles to be assembled and to be placed on the sliding table (3) by means of movement of the clamping element (6) which is a piston used for profile fixing.

7. Welding machine (1) according to any of the preceding Claims, **characterized in that** the at least one processing group (7) used to open the welding opening in radiused and recessed parts of the profile.

8. Welding machine (1) according to any of the preceding Claims, **characterized in that** the heating element (8) is a heating plate and/or a resistor which melts the end of the profiles joined together after the welding groove has been opened.

9. Welding machine (1) according to any of the preceding Claims, **characterized in that** crushing of the side surfaces of the burrs formed on the flat surfaces of the profiles, are 0.1 mm thin after welding.

10. Welding machine (1) according to any of the preceding Claims, **characterized in that** the at least one cleaning unit (11) comprises the stripping blades for removing the burrs on the profiles.

11. Welding machine (1) according to any of the preceding Claims, **characterized in that** the moving jaws (9) are moved by means of an engine (10) and are adapted for bringing the fixed profiles to the appropriate position for melting.

12. Welding machine (1) according to any of the preceding Claims, **characterized in that** the at least one rest mechanism (12) combined with the processing group which is a mill (7) and the stripping blades can compensate for an error in the profile length by a spring mechanism.

13. Welding machine (1) according to any of the preceding Claims, **characterized in that** the at least one positioning bearing (14) ensures a smooth deburring process by preventing the stripping blades from entering the profile during the cleaning process.

## Patentansprüche

1. Schweißmaschine (1) zum gratfreien Verbinden von PVC-Profilen, wobei die Vorrichtung umfasst
- mindestens einen Körper (2), in dem PVC-Profile zum Schweißen bearbeitet werden;
- mindestens zwei Gleittische (3) auf dem mindestens einen Körper (2), auf denen die zu verschweißenden Profile platziert werden,
- mindestens eine Klemmeinheit (5) mit mindestens einem Klemmelement (6), das zum Fixieren der auf den Gleittischen (3) platzierten Profile ausgebildet ist,
- mindestens eine Bearbeitungsgruppe (7), die ausgebildet ist, eine Schweißnut an den befestigten Profilen auszubilden,
- mindestens ein Heizelement (8), das zum Schmelzen der Profile ausgebildet ist, um die durch eine Bewegung der beweglichen Gleittische (3) zusammengebrachten Profile nach dem Ausbilden der Schweißnut zu verbinden;
- mindestens eine Druckplatte zum Einstellen der Dicke von Graten, die auf ebenen Fügeflächen der Profile aufgrund der Schweißnut auftreten können, aber nicht an den Kanten der Profile auftreten, durch Zusammendrücken der ebenen Fügeflächen von Seitenflächen der Profile aus, und
- mindestens zwei bewegliche Backen (9), die ausgebildet sind, die befestigten Profile mit Hilfe eines Motors (10) in die Schmelzposition zu bewegen und die Bewegung mit dem Aneinanderpressen der Profile zu kombinieren,
**dadurch gekennzeichnet, dass**
- die mindestens zwei Gleittische (3) dazu ausgebildet sind, durch ein Bewegungselement (4) bewegt zu werden, wodurch eine Gratbreite mittels eines Verstellmechanismus eingestellt werden kann, und in dem Reinigungs- und Schweißpositionen durch eine kontrollierte horizontale Bewegung (3) eingestellt werden können, und dass die Schweißmaschine (1) umfasst:
- mindestens eine Reinigungseinheit (11), die zum Reinigen der auf den Profiloberflächen gebildeten Grate ausgebildet ist, mit Positioniermessern an der Klemmeinheit (5) und Abstreifmessern, die mittels eines Federmechanismus Neigungen der Profile kompensieren,
- mindestens einen während des Gratreinigungsvorgangs der Reinigungseinheit (11) auf den ebenen Fügeflächen der Profile positionierten Abstützmechanismus (12), der an der Klemmeinheit (5) positioniert und zum Kompensieren von Abweichungen der Profillänge mittels eines Federmechanismus ausgebildet ist, den er hat,
- mindestens ein Rahmenabstoßelement (13), das zum Entfernen von geschweißten Profilen aus dem Gehäuse (2) ausgebildet ist, und
- mindestens ein Positionierungslager (14), das ausgebildet ist, einen reibungslosen Entgratungsvorgang sicherzustellen.

2. Schweißmaschine (1) nach Anspruch 1, **dadurch gekennzeichnet, dass** ein Gleittisch (3) dazu ausgebildet ist, die Öffnung der Schweißnut mit der Bearbeitungsgruppe (7) nach dem Fixieren des darauf platzierten Profils mit der Klemmeinheit (5) vorzusehen.

3. Schweißmaschine (1) nach Anspruch 1 oder 2, **dadurch gekennzeichnet, dass** ein Gleittisch (3) zum Anfahren der Schmelzposition ausgebildet ist, indem nach Einbringen der Öffnung der Schweißnut mit dem Heizelement (8) die für den Fügevorgang erforderlichen Profilenden angefahren werden.

4. Schweißmaschine (1) nach Anspruch 3, **dadurch gekennzeichnet, dass** der Gleittisch (3) dazu ausgebildet ist, in der Schmelzposition durch das Heizelement (8) bei der Durchführung des Schmelzvorgangs zu helfen.

5. Schweißmaschine (1) nach einem der vorhergehenden Ansprüche, **dadurch gekennzeichnet, dass** der Gleittisch (3) dazu ausgebildet ist, mit den Abstreifmessern bei dem Reinigen der Grate durch Bewegen der mindestens einen Reinigungseinheit (11) nach dem Reinigungsvorgang zu helfen.

6. Schweißmaschine (1) nach einem der vorhergehenden Ansprüche, **dadurch gekennzeichnet, dass** die Klemmeinheit (5) so ausgebildet ist, dass sie die Fixierung der zu verbindenden und auf dem Gleittisch (3) anzuordnenden Profile durch Bewegung des Klemmelements (6) ermöglicht, das ein zur Profilfixierung verwendeter Kolben ist.

7. Schweißmaschine (1) nach einem der vorhergehenden Ansprüche, **dadurch gekennzeichnet, dass** die mindestens eine Bearbeitungsgruppe (7) zum Öffnen der Schweißöffnung in gerundeten und vertieften Teilen des Profils dient.

8. Schweißmaschine (1) nach einem der vorhergehenden Ansprüche, **dadurch gekennzeichnet, dass** das Heizelement (8) eine Heizplatte und/oder ein Widerstand ist, der das Ende der zusammengefügten Profile nach dem Öffnen der Schweißnut schmilzt.

9. Schweißmaschine (1) nach einem der vorhergehenden Ansprüche, **dadurch gekennzeichnet, dass** die Seitenflächen der auf den ebenen Flächen der Profile gebildeten Grate nach dem Schweißen 0,1 mm dünn sind.

10. Schweißmaschine (1) nach einem der vorhergehenden Ansprüche, **dadurch gekennzeichnet, dass** die mindestens eine Reinigungseinheit (11) die Abstreifmesser zum Entfernen der Grate an den Profilen aufweist.

11. Schweißmaschine (1) nach einem der vorhergehenden Ansprüche, **dadurch gekennzeichnet, dass** die beweglichen Backen (9) mittels eines Motors (10) bewegt werden und ausgebildet sind, die fixierten Profile in die geeignete Position zum Schmelzen zu bringen.

12. Schweißmaschine (1) nach einem der vorhergehenden Ansprüche, **dadurch gekennzeichnet, dass** der mindestens eine Abstützmechanismus (12) in Verbindung mit der Bearbeitungsgruppe, die ein Fräser (7) ist, und den Abstreifmessern einen Fehler in der Profillänge durch einen Federmechanismus ausgleichen kann.

13. Schweißmaschine (1) nach einem der vorhergehenden Ansprüche, **dadurch gekennzeichnet, dass** das mindestens eine Positionierungslager (14) einen reibungslosen Entgratungsvorgang gewährleistet, indem es verhindert, dass die Abstreifmesser während des Reinigungsvorgangs in das Profil eindringen.

## Revendications

1. Machine à souder (1) pour assembler des profilés en PVC sans bavures, l'appareil comprenant :
- au moins un corps (2) dans lequel les profilés en PVC sont traités pour la soudure ;
- au moins deux tables coulissantes (3) sur l'au moins un corps (2) où sont placés les profilés à souder,
- au moins une unité de serrage (5) ayant au moins un élément de serrage (6) adapté pour fixer les profilés placés sur les tables coulissantes (3),
- au moins un groupe de traitement (7) adapté pour ouvrir une rainure de soudage sur les profilés fixés,
- au moins un élément chauffant (8) adapté pour faire fondre les profilés afin de joindre les profilés rapprochés par un mouvement des tables coulissantes mobiles (3) après l'ouverture de la rainure de soudure ;
- au moins une plaque de poussée adaptée pour ajuster l'épaisseur des bavures, qui peuvent apparaître sur les surfaces de joint plat des profilés en raison de la rainure de soudage, mais qui n'apparaissent pas sur les bords des profilés, en comprimant les surfaces de joint plat à partir des surfaces latérales des profilés, et
- au moins deux mâchoires mobiles (9) adaptées pour déplacer les profilés fixes vers la position de fusion à l'aide d'un moteur (10) et pour combiner le mouvement avec la compression des profilés l'un contre l'autre,
**caractérisé en ce que**
- les au moins deux tables coulissantes (3) sont adaptées pour être déplacées par un élément de mouvement (4), permettant ainsi d'ajuster une largeur de bavure au moyen d'un mécanisme d'ajustement, et dans lesquelles les positions de nettoyage et de soudage peuvent être ajustées par un mouvement horizontal contrôlé (3), et **en ce que** la machine à souder (1) comprend
- au moins une unité de nettoyage (11) adaptée pour nettoyer les bavures formées sur les surfaces des profils, avec des lames de positionnement sur l'unité de serrage (5) et des lames de décapage qui compensent les inclinaisons des profils au moyen d'un mécanisme à ressort,
- au moins un mécanisme d'appui (12) positionné sur les surfaces de jonction plates des profilés pendant le processus de nettoyage des bavures de l'unité de nettoyage (11), qui est positionné sur l'unité de serrage (5) et adapté pour compenser les écarts de longueur des profilés au moyen d'un mécanisme à ressort qu'il possède,
- au moins un élément de répulsion du cadre (13) adapté pour retirer les profilés soudés du corps (2) et
- au moins un palier de positionnement (14) adapté pour assurer le bon déroulement du processus d'ébavurage.

2. Machine à souder (1) selon la revendication 1, **caractérisée en ce qu'**une table coulissante (3) est adaptée pour assurer l'ouverture de la rainure de soudage avec le groupe de traitement (7) après fixation du profilé placé dessus avec l'unité de serrage (5).

3. Machine à souder (1) selon la revendication 1 ou 2, **caractérisée en ce qu'**une table coulissante (3) est adaptée pour se déplacer vers la position de fusion en se déplaçant vers les extrémités du profilé requises pour l'opération d'assemblage avec l'élément chauffant (8) après application de l'ouverture de la rainure de soudage.

4. Machine à souder (1) selon la revendication 3, **caractérisée en ce que** la table coulissante (3) est adaptée pour être aidée en position de fusion par l'élément chauffant (8) pour réaliser l'opération de fusion.

5. Machine à souder (1) selon l'une quelconque des revendications précédentes, **caractérisée en ce que** la table coulissante (3) est adaptée pour aider à nettoyer les bavures avec les lames de décapage en déplaçant l'au moins une unité de nettoyage (11) après le processus de nettoyage.

6. Machine à souder (1) selon l'une quelconque des revendications précédentes, **caractérisée en ce que** l'unité de serrage (5) est adaptée pour assurer la fixation des profilés à assembler et à placer sur la table coulissante (3) au moyen du déplacement de l'élément de serrage (6) qui est un piston utilisé pour la fixation des profilés.

7. Machine à souder (1) selon l'une quelconque des revendications précédentes, **caractérisée en ce que** le au moins un groupe de traitement (7) utilisé pour ouvrir l'ouverture de soudage dans les parties rayonnées et évidées du profilé.

8. Machine à souder (1) selon l'une quelconque des revendications précédentes, **caractérisée en ce que** l'élément chauffant (8) est une plaque chauffante et/ou une résistance qui fait fondre l'extrémité des profilés assemblés après l'ouverture de la rainure de soudage.

9. Machine à souder (1) selon l'une quelconque des revendications précédentes, **caractérisée en ce que** l'écrasement des surfaces latérales des bavures formées sur les surfaces planes des profilés, présente une épaisseur de 0,1 mm après soudage.

10. Machine à souder (1) selon l'une quelconque des revendications précédentes, **caractérisée en ce que** l'au moins une unité de nettoyage (11) comprend les lames de décapage pour enlever les bavures sur les profilés.

11. Machine à souder (1) selon l'une quelconque des revendications précédentes, **caractérisée en ce que** les mâchoires mobiles (9) sont déplacées au moyen d'un moteur (10) et sont adaptées pour amener les profilés fixes dans la position appropriée pour la fusion.

12. Machine à souder (1) selon l'une quelconque des revendications précédentes, **caractérisée en ce que** le au moins un mécanisme de repos (12) combiné avec le groupe de traitement qui est une fraise (7) et les lames de dénudage peut compenser une erreur dans la longueur du profilé par un mécanisme à ressort.

13. Machine à souder (1) selon l'une quelconque des revendications précédentes, **caractérisée en ce que** l'au moins un palier de positionnement (14) assure un processus d'ébavurage en douceur en empêchant les lames de dénudage de pénétrer dans le profilé pendant le processus de nettoyage.
